# EUROPEAN PATENT APPLICATION

(11) **EP 4 692 730 A1**
(43) Date of publication of application: **11.02.2026**
(21) Application number: 24780232.5
(22) Date of filing: 25.03.2024
(51) Int. Cl.: G01C 19/5776, G01C 19/5684

(54) **VIBRATION-TYPE ANGULAR VELOCITY SENSOR**

(30) Priority: 31.03.2023 JP 2023057621
(71) Applicant: Sumitomo Precision Products Co., Ltd., Hyogo 660-0891 (JP)
(72) Inventor: MORIGUCHI, Takafumi, Amagasaki-shi, Hyogo 660-0891 (JP)
(74) Representative: Viering, Jentschura & Partner mbB Patent- und Rechtsanwälte
(86) International application number: PCT/JP2024/011795
(87) International publication number: WO 2024/204118

(57) **Abstract**

A vibratory angular velocity sensor (100) includes a phase synchronization circuit (26) to output a frequency signal to control a frequency of a drive signal input to a vibrator (10). The phase synchronization circuit (26) includes a comparator (41) to compare a detection signal from the vibrator (10) with a reference signal generated based on the frequency signal, an integrator (42) including an operational amplifier (50) and a capacitor (70) to output an integrator output signal based on an output from the comparator (41), an oscillator (43) to output the frequency signal having a predetermined frequency based on the integrator output signal from the integrator (42), and a short-circuit switch (44) to cause short circuit so as to bypass the capacitor (70) of the integrator (42) at a time of activating the vibrator (10).

## Description

### Technical Field

The present invention relates to a vibratory angular velocity sensor, and more particularly, it relates to a vibratory angular velocity sensor including a phase synchronization circuit.

### Background Art

Conventionally, a vibratory angular velocity sensor including a phase synchronization circuit is known. Such a vibratory angular velocity sensor is disclosed in Japanese Patent No. 3808774, for example.

Japanese Patent No. 3808774 describes a vibrating structure gyroscope including a phase locked loop (phase synchronization circuit). The vibrating structure gyroscope includes a planar vibrating structure. In this planar vibrating structure, when a primary vibration along a first axis along a plane is excited and the vibrating structure is rotated around an axis perpendicular to the plane, a secondary vibration along a second axis tilted from the first axis is excited in the vibrating structure due to a Coriolis force. Based on this secondary vibration, the angular velocity of the rotation around the axis perpendicular to the plane of the vibrating structure is measured. In the vibratory angular velocity sensor described in Japanese Patent No. 3808774, the frequency of the primary vibration excited in the vibrating structure is adjusted by using the phase synchronization circuit.

### Prior Art

### Patent Document

Patent Document 1: Japanese Patent No. 3808774

### Summary of the Invention

### Problems to be Solved by the Invention

Although not clearly described in Japanese Patent No. 3808774, the phase synchronization circuit (phase locked loop) described in Japanese Patent No. 3808774 generally includes a filter circuit. The filter circuit in the phase synchronization circuit may include an integrator using an operational amplifier and a capacitor. In such a case, when there is a bias such as an error between two inputs to the operational amplifier, an output from the integrator may be biased at the time of activation at which the vibration of the vibrating structure (vibrator) begins due to integration of the bias between the two inputs to the operational amplifier of the integrator. In such a case, the frequency of a drive signal input to the vibrator at the time of activation is shifted due to a shift in the frequency of a signal output from the phase synchronization circuit, and thus the vibrator is not activated normally. Therefore, when the vibration of the vibrator is controlled by the phase synchronization circuit including the integrator using the operational amplifier, it is desired to reduce or prevent the possibility that the vibrator is not activated normally.

The present invention has been proposed in order to solve the aforementioned problems, and one object of the present invention is to provide a vibratory angular velocity sensor capable of reducing or preventing the possibility that a vibrator is not activated normally when the vibration of the vibrator is controlled by a phase synchronization circuit including an integrator using an operational amplifier.

### Means for Solving the Problems

In order to attain the aforementioned object, a vibratory angular velocity sensor according to an aspect of the present invention includes a vibrator, a phase synchronization circuit to output a frequency signal to control a frequency of a drive signal input to the vibrator, and a detection circuit to detect an angular velocity applied to the vibrator, and the phase synchronization circuit includes a comparator to compare a detection signal from the vibrator with a reference signal generated based on the frequency signal, an integrator including an operational amplifier and a capacitor to output an integrator output signal based on an output from the comparator, an oscillator to output the frequency signal having a predetermined frequency based on the integrator output signal from the integrator, and a short-circuit switch to cause short circuit so as to bypass the capacitor of the integrator at a time of activating the vibrator. In this description, the term "integrator output signal" includes an output signal integrated by the integrator and a signal output from the integrator in a state in which the short-circuit switch causes short circuit to bypass the capacitor of the integrator.

As described above, the vibratory angular velocity sensor according to this aspect of the present invention includes the short-circuit switch to cause short circuit so as to bypass the capacitor of the integrator at the time of activating the vibrator. Accordingly, even when there is a bias between two inputs to the operational amplifier at the time of activating the vibrator, the short-circuit switch causes short circuit so as to bypass the capacitor such that the operational amplifier does not form an integrating circuit. Thus, the possibility that the bias between the two inputs to the operational amplifier is integrated can be reduced or prevented. Therefore, the possibility that the output from the integrator is biased at the time of activation can be reduced or prevented, and thus the possibility that the frequency of the drive signal input to the vibrator is shifted at the time of activation can be reduced or prevented. Consequently, when the vibration of the vibrator is controlled by the phase synchronization circuit including the integrator using the operational amplifier, the possibility that the vibrator is not activated normally can be reduced or prevented.

In the vibratory angular velocity sensor according to this aspect, the integrator preferably includes a negative feedback circuit in which the capacitor is connected between an inverting input terminal and an output terminal of the operational amplifier, and the short-circuit switch is preferably configured to cause short circuit so as to bypass the capacitor in the negative feedback circuit of the integrator at the time of activating the vibrator. Accordingly, in the integrator including the operational amplifier in which the capacitor is connected to the negative feedback circuit, the short-circuit switch causes short circuit so as to bypass the capacitor such that the operational amplifier does not form an integrating circuit, and thus the possibility that the bias between the two inputs to the operational amplifier is integrated at the time of activating the vibrator can be reduced or prevented. Consequently, when the vibration of the vibrator is controlled by the phase synchronization circuit including the integrator using the operational amplifier in which the capacitor is connected to the negative feedback circuit, the possibility that the vibrator is not activated normally can be reduced or prevented.

In such a case, the short-circuit switch is preferably configured to short-circuit the inverting input terminal and the output terminal of the operational amplifier in the integrator at the time of activating the vibrator. Accordingly, the short-circuit switch short-circuits the inverting input terminal and the output terminal of the operational amplifier such that a voltage follower circuit can be formed in the integrator, which is a buffer circuit that outputs an input to a non-inverting input terminal of the operational amplifier without any change. Therefore, the integrator can be used as a buffer circuit, and thus even when there is a bias between inputs to two terminals, the inverting input terminal and the non-inverting input terminal of the operational amplifier, the possibility that the output from the integrator is biased at the time of activating the vibrator can be further reduced or prevented. Consequently, the possibility that the vibrator is not activated normally can be further reduced or prevented.

In the vibratory angular velocity sensor according to this aspect, the short-circuit switch is preferably configured to switch from a short-circuit state to an open state after a predetermined period of time has elapsed since activation of the vibrator, and the phase synchronization circuit is preferably configured to output the frequency signal generated by a feedback control based on the detection signal from the vibrator when the short-circuit switch is switched to the open state. Accordingly, the possibility that the vibrator is not activated normally can be reduced or prevented by a relatively simple control of switching the short-circuit switch from the short-circuit state to the open state after the predetermined period of time has elapsed since activation of the vibrator, and due to the passage of the predetermined period of time from the activation, the feedback control can be performed by the phase synchronization circuit in a state in which a normal detection signal is acquired from the vibrator. Therefore, the possibility that the vibrator is not activated normally can be easily reduced or prevented.

The vibratory angular velocity sensor according to this aspect preferably further includes an offset adjustment circuit connected to an input side of the integrator to adjust an offset amount between an inverting input terminal and a non-inverting input terminal of the operational amplifier, and the integrator is preferably configured to output the integrator output signal having a predetermined voltage value based on the output from the comparator and an output from the offset adjustment circuit. When the amount of adjustment by the offset adjustment circuit is large, the bias between the two inputs to the operational amplifier becomes relatively large due to the output from the offset adjustment circuit, and thus the bias in the output from the integrator at the time of activating the vibrator becomes larger. Therefore, when the offset amount between the inverting input terminal and the non-inverting input terminal of the operational amplifier is adjusted by the offset adjustment circuit, the short-circuit switch causes short circuit so as to bypass the capacitor of the integrator at the time of activating the vibrator such that the possibility that the output from the integrator is biased can be effectively reduced or prevented. Consequently, when the offset adjustment circuit adjusts the offset amount between the inverting input terminal and the non-inverting input terminal of the operational amplifier, the possibility that the vibrator is not activated normally can be effectively reduced or prevented. In this description, the term "offset amount" indicates a concept including a potential difference or current difference between terminals.

The vibratory angular velocity sensor according to this aspect preferably further includes a frequency adjustment circuit connected to an input side of the oscillator to adjust a frequency of the frequency signal output from the oscillator, and the oscillator is preferably configured to output, at the time of activating the vibrator, the frequency signal having a predetermined activation frequency based on the integrator output signal from the integrator, which is short-circuited by the short-circuit switch to bypass the capacitor, and an output from the frequency adjustment circuit. Accordingly, the frequency signal having the activation frequency at a level (numerical value) at which the vibrator is activated normally can be easily output based on the output from the integrator, which is short-circuited so as to bypass the capacitor, and the output from the frequency adjustment circuit. Therefore, the possibility that the vibrator is not activated normally can be easily reduced or prevented.

The vibratory angular velocity sensor according to this aspect preferably further includes a primary control circuit including the phase synchronization circuit to induce a primary vibration in the vibrator using the drive signal, and a secondary control circuit including the detection circuit, the phase synchronization circuit in the primary control circuit is preferably configured to output the frequency signal generated by a feedback control based on the detection signal obtained by detecting the primary vibration induced in the vibrator, and the detection circuit in the secondary control circuit is preferably configured to detect a secondary vibration that occurs in the vibrator due to the angular velocity applied to the vibrator. Accordingly, in the vibratory angular velocity sensor that operates using two control loops, the primary control circuit that controls driving of the vibrator and the secondary control circuit that detects the angular velocity, the short-circuit switch causes short circuit so as to bypass the capacitor at the time of activating the vibrator such that the possibility that the primary control circuit does not activate the vibrator normally can be effectively reduced or prevented.

The vibratory angular velocity sensor according to this aspect preferably further includes an output amplifier circuit connected to an output side of the integrator to output the integrator output signal from the integrator to an outside. Accordingly, the output amplifier circuit can output the integrator output signal from the integrator to the outside, and thus it is possible to externally check the integrator output signal at the time of activating the vibrator. Therefore, the output from the output amplifier circuit is monitored such that it can be easily determined whether or not a control is being performed normally at the time of activating the vibrator.

In the vibratory angular velocity sensor according to this aspect, the vibrator preferably includes a ring-shaped vibrator. Accordingly, the vibrating area can be made smaller than that of a disc-shaped vibrator having the same diameter, and thus power supplied to vibrate the vibrator can be relatively reduced.

### Advantageous Effect of the Invention

According to the present invention, as described above, it is possible to reduce or prevent the possibility that the vibrator is not activated normally when the vibration of the vibrator is controlled by the phase synchronization circuit including the integrator using the operational amplifier.

### Brief Description of the Drawings

[FIG. 1] A block diagram showing the configuration of a vibratory angular velocity sensor according to an embodiment.
[FIG. 2] A plan view showing a state in which a vibrator of the vibratory angular velocity sensor according to the embodiment is vibrating due to a primary vibration.
[FIG. 3] A plan view showing a state in which the vibrator of the vibratory angular velocity sensor according to the embodiment is vibrating due to a secondary vibration.
[FIG. 4] A block diagram showing the configuration of a PLL circuit.
[FIG. 5] A flowchart for illustrating the operation of the PLL circuit at the time of activating the vibrator. Modes for Carrying Out the Invention

An embodiment of the present invention is hereinafter described on the basis of the drawings.

### Configuration of Vibratory Angular Velocity Sensor

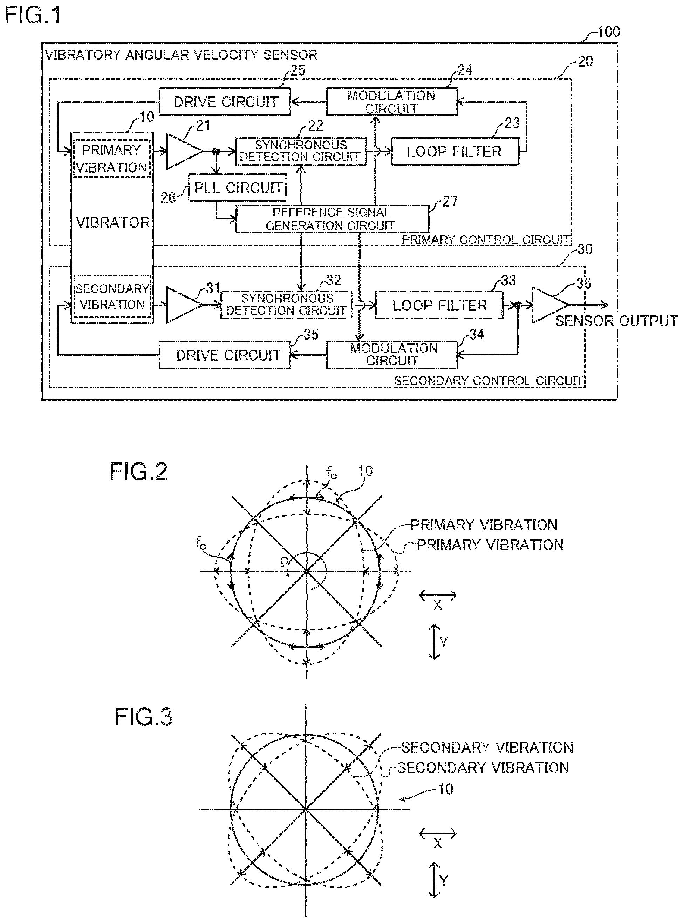

The configuration of a vibratory angular velocity sensor 100 according to the embodiment of the present invention is now described with reference to FIGS. 1 to 4. The vibratory angular velocity sensor 100 is a sensor configured to detect an angular velocity in a digital camera, a smartphone, a portable game machine, a robot, a car navigation system, a vehicle, etc. The vibratory angular velocity sensor 100 is a micro electro mechanical systems (MEMS) device, for example.

As shown in FIG. 1, the vibratory angular velocity sensor 100 includes a vibrator 10, a primary control circuit 20, and a secondary control circuit 30. The primary control circuit 20 includes a closed control loop that induces a primary vibration in the vibrator 10 by a drive signal. The secondary control circuit 30 includes a closed control loop that detects an angular velocity applied to the vibrator 10 by detecting a secondary vibration generated in the vibrator 10 due to the angular velocity applied to the vibrator 10. The secondary control circuit 30 is an example of a "detection circuit" in the claims.

As shown in FIGS. 2 and 3, the vibrator 10 is a ring-shaped vibrator 10. In the vibratory angular velocity sensor 100, the vibration of the vibrator 10 changes due to a Coriolis force f_{c} generated when a rotational motion is applied to the vibrator 10, which vibrates in a predetermined direction. The vibratory angular velocity sensor 100 is configured to detect an angular velocity based on the change in the vibration of the vibrator 10.

As shown in FIG. 2, the ring-shaped vibrator 10 is configured to vibrate rotationally symmetrically about the center of the vibrator 10. In the vibrator 10, the primary vibration in which a vibration in a Y direction and a vibration in an X direction perpendicular to the Y direction are alternately repeated is induced based on a drive signal generated by the primary control circuit 20. The primary control circuit 20 controls the drive signal such that the vibrator 10 vibrates at its natural frequency.

As shown in FIG. 3, the vibrator 10 vibrates in a direction inclined with respect to the X direction and the Y direction as the predetermined direction due to the Coriolis force f_{c} generated by applying a rotational motion (a rotational motion due to turning of a vehicle, for example). For example, as shown in FIG. 2, when an angular velocity Ω occurs around an axis perpendicular to the vibrator 10 (an axis perpendicular to the plane of the figure) in a state in which the primary vibration occurs in the vibrator 10, the Coriolis force f_{c} is generated. Due to the angular velocity applied to the vibrator 10 by the Coriolis force f_{c}, the secondary vibration (see FIG. 3) in a direction inclined with respect to the primary vibration is generated in the vibrator 10. The secondary control circuit 30 inputs a drive signal to the vibrator 10 so as to make the signal generated by the secondary vibration zero. Depending on the magnitude of the drive signal input so as to make this signal generated by the secondary vibration zero, the secondary control circuit 30 outputs a sensor output corresponding to the angular velocity applied to the vibrator 10.

Specifically, as shown in FIG. 1, the primary control circuit 20 includes an amplifier circuit 21, a synchronous detection circuit 22, a loop filter 23, a modulation circuit 24, a drive circuit 25, a phase locked loop (PLL) circuit 26, and a reference signal generation circuit 27. The vibrator 10, the amplifier circuit 21, the synchronous detection circuit 22, the loop filter 23, the modulation circuit 24, and the drive circuit 25 are connected in this order to form a closed control loop. The loop filter 23 includes an integrating circuit, for example. The PLL circuit 26 is an example of a "phase synchronization circuit" in the claims.

In the primary control circuit 20, a detection signal of the primary vibration output from the vibrator 10 is amplified by the amplifier circuit 21. The detection signal amplified by the amplifier circuit 21 has a sine wave shape. A reference signal (synchronization signal) is generated by the PLL circuit 26 and the reference signal generation circuit 27 based on the detection signal amplified by the amplifier circuit 21. Generation of the reference signal by the PLL circuit 26 and the reference signal generation circuit 27 is described in detail below. The generated reference signal is output to the synchronous detection circuit 22 and the modulation circuit 24. The generated reference signal is also output to the synchronous detection circuit 32 and the modulation circuit 34 of the secondary control circuit 30 described below.

The detection signal amplified by the amplifier circuit 21 is then detected by the synchronous detection circuit 22 based on the reference signal. The signal output from the synchronous detection circuit 22 is integrated by the loop filter 23 to be converted into a signal having a constant magnitude and output. The output from the loop filter 23 is then converted into a pulsed signal by the modulation circuit 24 based on the reference signal generated in the reference signal generation circuit 27. The signal converted into a pulsed signal by the modulation circuit 24 is then input to the drive circuit 25, and the primary vibration is induced in the vibrator 10 by the drive signal output from the drive circuit 25.

Signals in the secondary control circuit 30 are similar to the signals in the primary control circuit 20. The secondary control circuit 30 includes an amplifier circuit 31, a synchronous detection circuit 32, a loop filter 33, a modulation circuit 34, a drive circuit 35, and an amplifier circuit 36. The vibrator 10, the amplifier circuit 31, the synchronous detection circuit 32, the loop filter 33, the modulation circuit 34, and the drive circuit 35 are connected in this order to form a closed control loop. The loop filter 33 includes an integrating circuit, for example. An output of the loop filter 33 is input to the amplifier circuit 36. A detection signal of the secondary vibration generated in the vibrator 10 is input to the secondary control circuit 30. Then, a control process similar to that of the primary control circuit 20 is performed such that a drive signal is output to the vibrator 10 so as to make the detection signal of the secondary vibration substantially zero. In addition, in the secondary control circuit 30, a signal output from the amplifier circuit 36 is output as a sensor output indicating the magnitude of the angular velocity applied to the vibrator 10.

### Details of Generation of Reference Signal

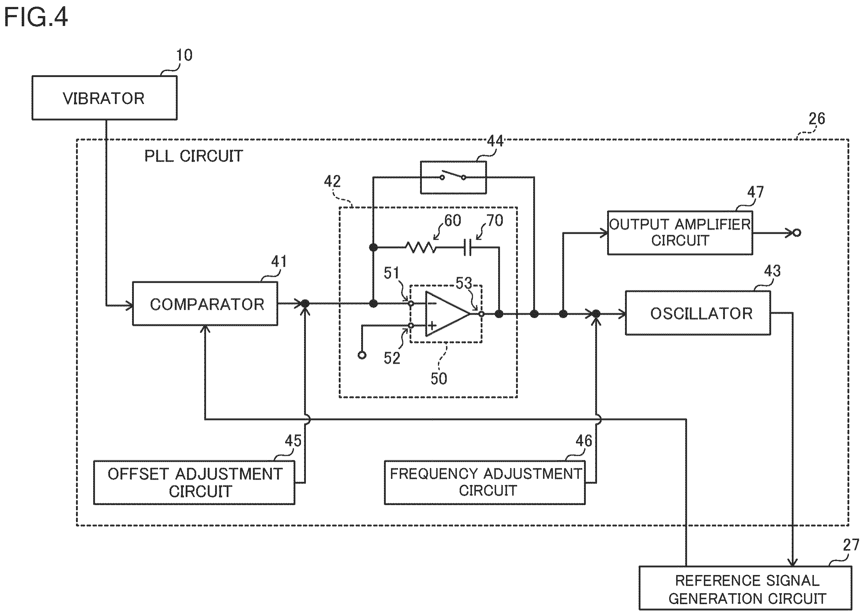

As shown in FIG. 4, the PLL circuit 26 outputs a frequency signal to control the frequency of the drive signal input to the vibrator 10. The reference signal generation circuit 27 outputs a reference signal based on the frequency signal from the PLL circuit 26. The PLL circuit 26 and the reference signal generation circuit 27 perform a control to output the frequency signal to vibrate the vibrator 10 at a predetermined frequency by a feedback control based on a detection signal obtained by detecting the primary vibration of the vibrator 10. The PLL circuit 26 includes a comparator 41, an integrator 42, an oscillator 43, a short-circuit switch 44, an offset adjustment circuit 45, a frequency adjustment circuit 46, and an output amplifier circuit 47.

The comparator 41 compares the detection signal of the primary vibration from the vibrator 10 with the reference signal. Specifically, the comparator 41 compares the detection signal of the primary vibration from the vibrator 10 amplified by the amplifier circuit 21 with the reference signal generated by the reference signal generation circuit 27. The comparator 41 is a phase comparator that compares the phase of the detection signal with the phase of the reference signal. The comparator 41 outputs a comparison signal, which is the result of comparison between the detection signal and the reference signal, to the integrator 42. The comparison signal is a signal that represents a phase difference between the detection signal of the primary vibration and the reference signal.

The integrator 42 outputs an integrator output signal based on the output from the comparator 41. The integrator 42 includes an operational amplifier 50, a resistor 60, and a capacitor 70. The operational amplifier 50 is an operational amplifier (op-amp). The operational amplifier 50 includes two input terminals, an inverting input terminal 51 and a non-inverting input terminal 52, and an output terminal 53. The operational amplifier 50 is an integrated circuit configured to amplify a potential difference between two inputs to the inverting input terminal 51 and the non-inverting input terminal 52, and output the amplified potential difference from the output terminal 53. In this embodiment, the integrator 42 includes a negative feedback circuit in which the capacitor 70 is connected between the inverting input terminal 51 and the output terminal 53 of the operational amplifier 50. That is, the integrator 42 includes an integrating circuit formed by the operational amplifier 50 (op-amp) and the capacitor 70. In the negative feedback circuit of the operational amplifier 50 of the integrator 42, the resistor 60 is connected in series with the capacitor 70. The integrator 42 integrates the comparison signal, which is the output from the comparator 41, to output the integrator output signal to the oscillator 43. In the operational amplifier 50, the comparison signal from the comparator 41 is input to the inverting input terminal 51. A reference potential having a constant magnitude is applied to the non-inverting input terminal 52.

The offset adjustment circuit 45 is connected to the input side of the integrator 42. The offset adjustment circuit 45 adjusts an offset amount, which is a potential difference or current difference between the inverting input terminal 51 and the non-inverting input terminal 52. The offset adjustment circuit 45 is connected to the inverting input terminal 51 of the operational amplifier 50, and outputs an offset adjustment signal, which is a DC signal having a predetermined magnitude, to the inverting input terminal 51. Therefore, the integrator 42 outputs an integrator output signal having a predetermined voltage value by integrating an input signal obtained by combining the comparison signal, which is the output from the comparator 41, and the offset adjustment signal, which is the output from the offset adjustment circuit 45. The offset adjustment signal has a value set such that the feedback control in the PLL circuit 26 is appropriately performed. Therefore, the offset adjustment signal is not limited to an adjustment signal for performing an adjustment to eliminate the offset amount (the potential difference or current difference) between the inverting input terminal 51 and the non-inverting input terminal 52. The offset adjustment signal that is the output from the offset adjustment circuit 45 is, for example, a signal for adjusting the phase of the reference signal.

The output amplifier circuit 47 is connected to the output side of the integrator 42. The output amplifier circuit 47 is provided to output the integrator output signal from the integrator 42 to the outside. The output amplifier circuit 47 amplifies and outputs the input integrator output signal. For example, the output amplifier circuit 47 includes an amplifier circuit using an operational amplifier (op-amp).

The oscillator 43 outputs a frequency signal having a predetermined frequency based on the integrator output signal from the integrator 42. The oscillator 43 is, for example, a voltage-controlled oscillator (VCO) in which an oscillating frequency changes according to an input voltage. The oscillator 43 outputs a frequency signal having a frequency according to the input voltage. The frequency signal is a pulse signal, for example.

The frequency adjustment circuit 46 is connected to the input side of the oscillator 43. The frequency adjustment circuit 46 outputs a frequency adjustment signal for adjusting the value of the frequency of the frequency signal output from the oscillator 43. The frequency adjustment circuit 46 outputs the frequency adjustment signal, which is a DC signal having a predetermined magnitude. That is, the integrator output signal from the integrator 42 and the frequency adjustment signal output from the frequency adjustment circuit 46 are input to the oscillator 43. The oscillator 43 receives a signal obtained by combining the integrator output signal from the integrator 42 and the frequency adjustment signal from the frequency adjustment circuit 46, and outputs a frequency signal having a frequency according to the input. The frequency signal output from the oscillator 43 is output to the reference signal generation circuit 27. The PLL circuit 26 controls the frequency of the output frequency signal by the feedback control based on the detection signal of the primary vibration amplified by the amplifier circuit 21 such that the vibrator 10 vibrates at its natural frequency. For example, in this embodiment, the frequency of the reference signal from the reference signal generation circuit 27 becomes the frequency of the drive signal input to the vibrator 10. The frequency of the primary vibration of the vibrator 10 is substantially equal to the frequency of this drive signal. The frequency of the frequency signal from the oscillator 43 serves as a reference value for the reference signal from the reference signal generation circuit 27 and the frequency of the drive signal input to the vibrator 10. For example, the reference signal generation circuit 27 includes a frequency divider, and generates a reference signal having a frequency obtained by dividing the frequency of the frequency signal by an integer based on the frequency signal from the oscillator 43. Therefore, the frequency of the frequency signal from the oscillator 43 is multiplied (n times: n is an integer) by the frequency of the reference signal, and the frequency of the reference signal is controlled by controlling the frequency of the frequency signal output from the oscillator 43. The frequency of the frequency signal from the oscillator 43 is a multiple (n times: n is an integer) of the frequency of the reference signal, and thus the frequency of the frequency signal output from the oscillator 43 is controlled such that the frequency of the reference signal is controlled. In this embodiment, the frequency signal is controlled by the feedback control in the PLL circuit 26 such that the frequency of the reference signal from the reference signal generation circuit 27 matches the natural frequency of the vibrator 10.

The magnitude (voltage value or current value) of the offset adjustment signal output from the offset adjustment circuit 45 and the magnitude (voltage value or current value) of the frequency adjustment signal output from the frequency adjustment circuit 46 are set in advance and stored in a storage such as a nonvolatile memory. The magnitude of the frequency adjustment signal is set in advance by monitoring the signal from the output amplifier circuit 47, for example. In other words, the output amplifier circuit 47 outputs the integrator output signal, which is the output from the integrator 42, to the outside in order to set the output from the frequency adjustment circuit 46.

The PLL circuit 26 according to this embodiment includes the short-circuit switch 44 to operate normally at the time of activating the vibrator 10. In this embodiment, the short-circuit switch 44 causes short circuit so as to bypass the capacitor 70 in the negative feedback circuit of the integrator 42 at the time of activating the vibrator 10. Specifically, the short-circuit switch 44 short-circuits the inverting input terminal 51 and the output terminal 53 of the operational amplifier 50 in the integrator 42 at the time of activating the vibrator 10. In other words, the short-circuit switch 44 is connected in parallel to the operational amplifier 50, between the inverting input terminal 51 and the output terminal 53 of the operational amplifier 50. The short-circuit switch 44 switches the conduction of the circuit on and off based on an input signal. The short-circuit switch 44 includes an analog switch, for example.

### Activation of Vibrator

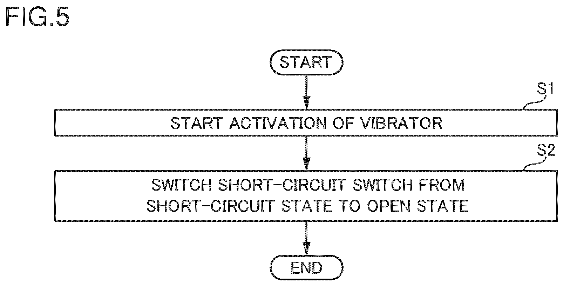

A method for activating the vibrator 10 is now described with reference to FIG. 5. Specifically, the operation of the PLL circuit 26 at the time of activating the vibrator 10 is described.

First, in step S1, activation of the vibrator 10 is started. For example, power is supplied to the vibratory angular velocity sensor 100 from a control device such as a central processing unit (CPU) not shown. At the time of activating the vibrator 10, the short-circuit switch 44 is turned on (short-circuit state). At the time of activating the vibrator 10, the short-circuit switch 44 is in the short-circuit state, and thus the operational amplifier 50 of the integrator 42 bypasses the resistor 60 and the capacitor 70, and the inverting input terminal 51 and the output terminal 53 are short-circuited. Therefore, in the integrator 42, an integrating circuit is not formed, and a voltage follower circuit, which is a buffer circuit that outputs an input to the non-inverting input terminal 52 of the operational amplifier 50 without any change, is formed. Therefore, at the time of activating the vibrator 10, the integrator 42 outputs the reference potential applied to the non-inverting input terminal 52 without any change. That is, at the time of activating the vibrator 10, the integrator output signal output from the integrator 42 becomes a DC signal having the reference potential.

Therefore, in this embodiment, at the time of activating the vibrator 10, the oscillator 43 outputs a frequency signal having a predetermined activation frequency based on the integrator output signal from the integrator 42, which is short-circuited by the short-circuit switch 44 to bypass the capacitor 70, and the output from the frequency adjustment circuit 46. That is, at the time of activating the vibrator 10, the oscillator 43 outputs the frequency signal having the predetermined activation frequency by receiving the signal obtained by combining the integrator output signal having the reference potential and the frequency adjustment signal having the predetermined magnitude from the frequency adjustment circuit 46. In other words, the signal output from the frequency adjustment circuit 46 is preset such that the oscillator 43 outputs a frequency signal having the activation frequency at the time of activating the vibrator 10. The value of the activation frequency is a level (numerical value) at which the frequency of the primary vibration induced in the vibrator 10 is close to the natural frequency of the vibrator 10. In this embodiment, the frequency (oscillation frequency) of the primary vibration of the vibrator 10 becomes substantially equal to the frequency of the reference signal generated in the reference signal generation circuit 27 based on the frequency signal output from the oscillator 43, and thus the value of the activation frequency is a level (numerical value) at which the frequency of the reference signal is close to the natural frequency of the vibrator 10. The term "value close to the natural frequency" as used herein is described as a concept that also includes a value equal to the natural frequency.

At the time of activating the vibrator 10, the primary vibration is not induced in the vibrator 10, and thus the drive signal from the vibrator 10 is not detected or the output of the drive signal is very small. Therefore, when there is a bias between the two inputs to the operational amplifier 50 and the short-circuit switch 44 is not in the short-circuit state (on-state), a normal comparison signal is not obtained from the comparator 41, and the offset adjustment signal from the offset adjustment circuit 45 is integrated in the integrator 42. Thus, the integrator output signal from the integrator 42 may be biased. In such a case, the frequency of the frequency signal output from the oscillator 43 is different in value from the activation frequency. That is, the oscillator 43 does not output a frequency signal having an activation frequency at a level (numerical value) at which the vibrator 10 vibrates at a frequency close to its natural frequency, and the reference signal generated in the reference signal generation circuit 27 is not close to the natural frequency of the vibrator 10. The vibratory angular velocity sensor 100 is configured to normally perform the feedback control when the vibrator 10 vibrates at a value close to its natural frequency, and thus when a frequency signal for generating a reference signal having a frequency close to the natural frequency is not output, the vibrator 10 is not activated normally. In this embodiment, at the time of activating the vibrator 10, the short-circuit switch 44 is in the short-circuit state such that the integrator output signal having the reference potential is output from the integrator 42, and thus the possibility that the vibrator 10 is not activated normally is reduced or prevented.

Next, in step S2, the short-circuit switch 44 is switched from the short-circuit state to an open state. In this embodiment, the short-circuit switch 44 switches from the short-circuit state to the open state after a predetermined period of time has elapsed since activation of the vibrator 10. For example, by using a reset circuit in which a signal is switched after the predetermined period of time has elapsed, the short-circuit switch 44 is switched from an on-state to an off-state after the predetermined period of time has elapsed since activation of the vibrator 10. The predetermined period of time is several hundred milliseconds, for example.

In this embodiment, the short-circuit switch 44 is switched to the open state such that the PLL circuit 26 outputs a frequency signal generated by the feedback control based on the detection signal from the vibrator 10. That is, the PLL circuit 26 receives the detection signal of the primary vibration from the vibrator 10 that is vibrating at a frequency close to its natural frequency, and the comparator 41 compares the phase of the detection signal with the phase of the reference signal from the reference signal generation circuit 27 such that the frequency signal is controlled by the feedback control such that the frequency of the reference signal becomes the natural frequency.

### Advantageous Effects of This Embodiment

According to this embodiment, the following advantageous effects are achieved.

According to this embodiment, as described above, the PLL circuit 26 (phase synchronization circuit) of the vibratory angular velocity sensor 100 includes the short-circuit switch 44 to cause short circuit so as to bypass the capacitor 70 of the integrator 42 at the time of activating the vibrator 10. Accordingly, even when there is a bias between the two inputs to the operational amplifier 50 at the time of activating the vibrator 10, the short-circuit switch 44 causes short circuit so as to bypass the capacitor 70 such that the operational amplifier 50 does not form an integrating circuit. Thus, the possibility that the bias between the two inputs to the operational amplifier 50 is integrated can be reduced or prevented. Therefore, the possibility that the output from the integrator 42 is biased at the time of activation can be reduced or prevented, and thus the possibility that the frequency of the drive signal input to the vibrator 10 is shifted at the time of activation can be reduced or prevented. Consequently, when the vibration of the vibrator 10 is controlled by the PLL circuit 26 (phase synchronization circuit) including the integrator 42 using the operational amplifier 50, the possibility that the vibrator 10 is not activated normally can be reduced or prevented.

According to this embodiment, as described above, the integrator 42 includes the negative feedback circuit in which the capacitor 70 is connected between the inverting input terminal 51 and the output terminal 53 of the operational amplifier 50. The short-circuit switch 44 is configured to cause short circuit so as to bypass the capacitor 70 in the negative feedback circuit of the integrator 42 at the time of activating the vibrator 10. Accordingly, in the integrator 42 including the operational amplifier 50 in which the capacitor 70 is connected to the negative feedback circuit, the short-circuit switch 44 causes short circuit so as to bypass the capacitor 70 such that the operational amplifier 50 does not form an integrating circuit, and thus the possibility that the bias between the two inputs to the operational amplifier 50 is integrated at the time of activating the vibrator 10 can be reduced or prevented. Consequently, when the vibration of the vibrator 10 is controlled by the PLL circuit 26 (phase synchronization circuit) including the integrator 42 using the operational amplifier 50 in which the capacitor 70 is connected to the negative feedback circuit, the possibility that the vibrator 10 is not activated normally can be reduced or prevented.

According to this embodiment, as described above, the short-circuit switch 44 is configured to short-circuit the inverting input terminal 51 and the output terminal 53 of the operational amplifier 50 in the integrator 42 at the time of activating the vibrator 10. Accordingly, the short-circuit switch 44 short-circuits the inverting input terminal 51 and the output terminal 53 of the operational amplifier 50 such that a voltage follower circuit can be formed in the integrator 42, which is a buffer circuit that outputs the input to the non-inverting input terminal 52 of the operational amplifier 50 without any change. Therefore, the integrator 42 can be used as a buffer circuit, and thus even when there is a bias between the inputs to the two terminals, the inverting input terminal 51 and the non-inverting input terminal 52 of the operational amplifier 50, the possibility that the output from the integrator 42 is biased at the time of activating the vibrator 10 can be further reduced or prevented. Consequently, the possibility that the vibrator 10 is not activated normally can be further reduced or prevented.

According to this embodiment, as described above, the short-circuit switch 44 is configured to switch from the short-circuit state to the open state after the predetermined period of time has elapsed since activation of the vibrator 10. The PLL circuit 26 (phase synchronization circuit) is configured to output the frequency signal generated by the feedback control based on the detection signal from the vibrator 10 when the short-circuit switch 44 is switched to the open state. Accordingly, the possibility that the vibrator 10 is not activated normally can be reduced or prevented by a relatively simple control of switching the short-circuit switch 44 from the short-circuit state to the open state after the predetermined period of time has elapsed since activation of the vibrator 10, and due to the passage of the predetermined period of time from the activation, the feedback control can be performed by the PLL circuit 26 in a state in which a normal detection signal is acquired from the vibrator 10. Therefore, the possibility that the vibrator 10 is not activated normally can be easily reduced or prevented.

According to this embodiment, as described above, the vibratory angular velocity sensor 100 includes the offset adjustment circuit 45 connected to the input side of the integrator 42 to adjust the offset amount between the inverting input terminal 51 and the non-inverting input terminal 52 of the operational amplifier 50. The integrator 42 is configured to output the integrator output signal having the predetermined voltage value based on the output from the comparator 41 and the output from the offset adjustment circuit 45. When the amount of adjustment by the offset adjustment circuit 45 is large, the bias between the two inputs to the operational amplifier 50 becomes relatively large due to the output from the offset adjustment circuit 45, and thus the bias in the output from the integrator 42 at the time of activating the vibrator 10 becomes larger. Therefore, when the offset amount between the inverting input terminal 51 and the non-inverting input terminal 52 of the operational amplifier 50 is adjusted by the offset adjustment circuit 45, the short-circuit switch 44 causes short circuit so as to bypass the capacitor 70 of the integrator 42 at the time of activating the vibrator 10 such that the possibility that the output from the integrator 42 is biased can be effectively reduced or prevented. Consequently, when the offset adjustment circuit 45 adjusts the offset amount between the inverting input terminal 51 and the non-inverting input terminal 52 of the operational amplifier 50, the possibility that the vibrator 10 is not activated normally can be effectively reduced or prevented.

According to this embodiment, as described above, the vibratory angular velocity sensor 100 includes the frequency adjustment circuit 46 connected to the input side of the oscillator 43 to adjust the frequency of the frequency signal output from the oscillator 43. The oscillator 43 is configured to output, at the time of activating the vibrator 10, the frequency signal having the predetermined activation frequency based on the integrator output signal from the integrator 42, which is short-circuited by the short-circuit switch 44 to bypass the capacitor 70, and the output from the frequency adjustment circuit 46. Accordingly, the frequency signal having the activation frequency at a level (numerical value) at which the vibrator 10 is activated normally can be easily output based on the output from the integrator 42, which is short-circuited so as to bypass the capacitor 70, and the output from the frequency adjustment circuit 46. Therefore, the possibility that the vibrator 10 is not activated normally can be easily reduced or prevented.

According to this embodiment, as described above, the vibratory angular velocity sensor 100 includes the primary control circuit 20 including the PLL circuit 26 (phase synchronization circuit) to induce the primary vibration in the vibrator 10 using the drive signal, and the secondary control circuit 30 (detection circuit). The PLL circuit 26 in the primary control circuit 20 is configured to output the frequency signal generated by the feedback control based on the detection signal obtained by detecting the primary vibration induced in the vibrator 10, and the secondary control circuit 30 (detection circuit) is configured to detect the secondary vibration that occurs in the vibrator 10 due to the angular velocity applied to the vibrator 10. Accordingly, in the vibratory angular velocity sensor 100 that operates using two control loops, the primary control circuit 20 that controls driving of the vibrator 10 and the secondary control circuit 30 that detects the angular velocity, the short-circuit switch 44 causes short circuit so as to bypass the capacitor 70 at the time of activating the vibrator 10 such that the possibility that the primary control circuit 20 does not activate the vibrator 10 normally can be effectively reduced or prevented.

According to this embodiment, as described above, the vibratory angular velocity sensor 100 includes the output amplifier circuit 47 connected to the output side of the integrator 42 to output the integrator output signal from the integrator 42 to the outside. Accordingly, the output amplifier circuit 47 can output the integrator output signal from the integrator 42 to the outside, and thus it is possible to externally check the integrator output signal at the time of activating the vibrator 10. Therefore, the output from the output amplifier circuit 47 is monitored such that it can be easily determined whether or not a control is being performed normally at the time of activating the vibrator 10.

According to this embodiment, as described above, the vibrator 10 includes a ring-shaped vibrator 10. Accordingly, the vibrating area can be made smaller than that of a disc-shaped vibrator 10 having the same diameter, and thus power supplied to vibrate the vibrator 10 can be relatively reduced.

### Modified Examples

The embodiment disclosed this time must be considered as illustrative in all points and not restrictive. The scope of the present invention is not shown by the above description of the embodiment but by the scope of claims for patent, and all modifications (modified examples) within the meaning and scope equivalent to the scope of claims for patent are further included.

For example, while the example in which in the integrator 42 of the PLL circuit 26 (phase synchronization circuit), a negative feedback circuit is formed in which the resistor 60 is connected in series with the capacitor 70 between the inverting input terminal 51 and the output terminal 53 has been shown in the aforementioned embodiment, the present invention is not restricted to this. In the present invention, the integrator of the phase synchronization circuit may include other than an integrating circuit in which a capacitor is connected to a negative feedback circuit. Alternatively, in the integrator, a negative feedback circuit may be formed in which no resistor is connected between the inverting input terminal and the output terminal of the operational amplifier, and only a capacitor is connected therebetween. Alternatively, in the integrator, a resistor may be connected in parallel to a capacitor, or a capacitor may be connected in parallel to a resistor connected in series with another capacitor.

While the example in which the short-circuit switch 44 is connected to short-circuit the inverting input terminal 51 and the output terminal 53 of the operational amplifier 50 has been shown in the aforementioned embodiment, the present invention is not restricted to this. In the present invention, the short-circuit switch may be connected so as to bypass only the capacitor. That is, when a resistor is connected in series with a capacitor, the short-circuit switch may be connected to short-circuit the input side and output side of the capacitor so as to bypass only the capacitor without bypassing the resistor.

While the example in which the short-circuit switch 44 is switched from the short-circuit state to the open state after the predetermined period of time has elapsed since activation of the vibrator 10 has been shown in the aforementioned embodiment, the present invention is not restricted to this. In the present invention, the short-circuit switch may be switched from the short-circuit state to the open state based on a detection signal of the primary vibration of the vibrator. For example, the short-circuit switch may be switched between the on-state (short-circuit state) and the off-state (open state) after the predetermined period of time has elapsed since activation of the vibrator, under the control of a computing device such as a microcontroller. Alternatively, the short-circuit switch may be switched to the open state when it is confirmed that the vibrator is vibrating at the predetermined frequency based on the detection signal of the primary vibration of the vibrator.

While the example in which the offset adjustment circuit 45 is connected to the input side of the integrator 42 has been shown in the aforementioned embodiment, the present invention is not restricted to this. In the present invention, the offset adjustment circuit may not be connected to the input side of the integrator. Even in such a case, a bias may occur in the output due to an input error of the operational amplifier of the integrator itself, and thus the short-circuit switch is set to the short-circuit state at the time of activating the vibrator such that the possibility that the vibrator is not activated normally can be reduced or prevented.

While the example in which the frequency adjustment circuit 46 is connected to the input side of the oscillator 43 has been shown in the aforementioned embodiment, the present invention is not restricted to this. In the present invention, the frequency adjustment circuit may not be connected to the input side of the oscillator. For example, when the output from the integrator at the time of activating the vibrator is an appropriate output for outputting a frequency signal having the activation frequency from the oscillator, the frequency adjustment circuit may not be connected.

While the example in which the vibratory angular velocity sensor 100 includes two closed control loops, the primary control circuit 20 including the vibrator 10, the amplifier circuit 21, the synchronous detection circuit 22, the loop filter 23, the modulation circuit 24, and the drive circuit 25, and the secondary control circuit 30 including the vibrator 10, the amplifier circuit 31, the synchronous detection circuit 32, the loop filter 33, the modulation circuit 34, and the drive circuit 35, and the PLL circuit 26 is included in the primary control circuit 20 has been shown in the aforementioned embodiment, the present invention is not restricted to this. In the present invention, the control loops may each include a configuration other than the configuration including the amplifier circuit, the synchronous detection circuit, the loop filter, the modulation circuit, and the drive circuit. Furthermore, while the example in which integrating circuits are used as the loop filters 23 and 33 has been shown in the aforementioned embodiment, loop filters other than the integrating circuits may be used, for example.

While the example in which the output amplifier circuit 47 is connected to the output side of the integrator 42 has been shown in the aforementioned embodiment, the present invention is not restricted to this. In the present invention, the output amplifier circuit may not be connected to the output side of the integrator. Alternatively, when an integrator output signal is output from the integrator to the outside, an output circuit that does not include an amplifier may be connected to the output side of the integrator.

While the example in which the vibrator 10 is ring-shaped has been shown in the aforementioned embodiment, the present invention is not restricted to this. In the present invention, the vibrator 10 may have a disc shape, a polygonal plate shape, a polygonal ring shape, or a polygonal shape. Alternatively, the vibrator may have a tuning fork shape, an H-shape, or a wine glass shape.

While the example in which the short-circuit switch 44 is an analog switch has been shown in the aforementioned embodiment, the present invention is not restricted to this. In the present invention, the short-circuit switch may be a mechanical relay or a semiconductor relay including a switching device such as a metal-oxide-semiconductor field-effect transistor (MOSFET).

### Description of Reference Numerals

- 10:: vibrator
- 20:: primary control circuit
- 26:: PLL circuit (phase synchronization circuit)
- 30:: secondary control circuit (detection circuit)
- 41:: comparator
- 42:: integrator
- 43:: oscillator
- 44:: short-circuit switch
- 45:: offset adjustment circuit
- 46:: frequency adjustment circuit
- 47:: output amplifier circuit
- 50:: operational amplifier
- 51:: inverting input terminal
- 52:: non-inverting input terminal
- 53:: output terminal
- 70:: capacitor
- 100:: vibratory angular velocity sensor

## Claims

1. A vibratory angular velocity sensor comprising:
a vibrator;
a phase synchronization circuit to output a frequency signal to control a frequency of a drive signal input to the vibrator; and
a detection circuit to detect an angular velocity applied to the vibrator; wherein
the phase synchronization circuit includes:
a comparator to compare a detection signal from the vibrator with a reference signal generated based on the frequency signal;
an integrator including an operational amplifier and a capacitor to output an integrator output signal based on an output from the comparator;
an oscillator to output the frequency signal having a predetermined frequency based on the integrator output signal from the integrator; and
a short-circuit switch to cause short circuit so as to bypass the capacitor of the integrator at a time of activating the vibrator.

2. The vibratory angular velocity sensor according to claim **1,** wherein
the integrator includes a negative feedback circuit in which the capacitor is connected between an inverting input terminal and an output terminal of the operational amplifier; and
the short-circuit switch is configured to cause short circuit so as to bypass the capacitor in the negative feedback circuit of the integrator at the time of activating the vibrator.

3. The vibratory angular velocity sensor according to claim 2, wherein the short-circuit switch is configured to short-circuit the inverting input terminal and the output terminal of the operational amplifier in the integrator at the time of activating the vibrator.

4. The vibratory angular velocity sensor according to claim **1,** wherein
the short-circuit switch is configured to switch from a short-circuit state to an open state after a predetermined period of time has elapsed since activation of the vibrator; and
the phase synchronization circuit is configured to output the frequency signal generated by a feedback control based on the detection signal from the vibrator when the short-circuit switch is switched to the open state.

5. The vibratory angular velocity sensor according to claim 1, further comprising:
an offset adjustment circuit connected to an input side of the integrator to adjust an offset amount between an inverting input terminal and a non-inverting input terminal of the operational amplifier; wherein
the integrator is configured to output the integrator output signal having a predetermined voltage value based on the output from the comparator and an output from the offset adjustment circuit.

6. The vibratory angular velocity sensor according to claim 1, further comprising:
a frequency adjustment circuit connected to an input side of the oscillator to adjust a frequency of the frequency signal output from the oscillator; wherein
the oscillator is configured to output, at the time of activating the vibrator, the frequency signal having a predetermined activation frequency based on the integrator output signal from the integrator, which is short-circuited by the short-circuit switch to bypass the capacitor, and an output from the frequency adjustment circuit.

7. The vibratory angular velocity sensor according to claim 1, further comprising:
a primary control circuit including the phase synchronization circuit to induce a primary vibration in the vibrator using the drive signal; and
a secondary control circuit including the detection circuit; wherein
the phase synchronization circuit in the primary control circuit is configured to output the frequency signal generated by a feedback control based on the detection signal obtained by detecting the primary vibration induced in the vibrator; and
the detection circuit in the secondary control circuit is configured to detect a secondary vibration that occurs in the vibrator due to the angular velocity applied to the vibrator.

8. The vibratory angular velocity sensor according to claim 1, further comprising:
an output amplifier circuit connected to an output side of the integrator to output the integrator output signal from the integrator to an outside.

9. The vibratory angular velocity sensor according to claim 1, wherein the vibrator includes a ring-shaped vibrator.
